# EUROPEAN PATENT APPLICATION

(11) **EP 4 524 877 A1**
(43) Date of publication of application: **19.03.2025**
(21) Application number: 23197423.9
(22) Date of filing: 14.09.2023
(51) Int. Cl.: G06T 5/00, G06V 10/98, H04N 1/393

(54) **METHOD AND SYSTEM FOR INSPECTING A PRINTED IMAGE USING SUPER-RESOLUTION**

(71) Applicant: Advanced Vision Technology (AVT) Ltd., 4527703 Hod Hasharon (IL)
(72) Inventor: Ben Ezra, Barry, CH-8105 Regensdorf (CH); Gazala, Chanan, CH-8105 Regensdorf (CH); Pinhas, Hadar, CH-8105 Regensdorf (CH)
(74) Representative: Jonas, Hans-Hermann

(57) **Abstract**

Method for inspecting a printed halftone image, including capturing a digital image of the halftone image at a predefined first resolution, providing the captured digital image as an input to at least one neural network (NN), and outputting with the NN one or more synthesized magnified image areas of one or more regions of interest in the captured digital image using super-resolution. Each magnified image area has a second resolution greater than the first resolution and features a plurality of visually-defined halftone dots. The NN is trained using a plurality of perfect pairs of printed information at the first resolution and the second resolution captured from a training printed halftone image. A system for performing the method includes a first resolution camera for capturing the digital image at the predefined first resolution, and a processor programmed with instructions for processing the captured digital image using super-resolution.

## Description

### BACKGROUND OF THE INVENTION

Some printing press machines have a viewer (i.e. a viewing camera) that provides the press operator the ability to manually see and explore the images printed on the material, even at very high speeds. In addition, some printing press machines have an inspection system that automatically provides the press operator feedback and alerts on the quality of the print. Most such inspection systems use line scan cameras to acquire images for executing 100% inspection (i.e. inspecting the entire width and length of the printed substrate), providing the press operator defect information in real time. A typical viewer also includes some type of optical magnification, such as a motorized zoom lens, which enables optically magnifying the print, thus viewing smaller regions at higher resolutions. These high resolutions may be particularly desirable for investigating certain types of features, such as register marks - which are designed to enable quantifying (and ultimately correcting) the offset between the various print decks. The inspection systems may be used for identifying various types of defects, including but not limited to dot gain (i.e. tonal value increase that causes printed areas to look darker than intended, caused by halftone dots being larger in area in the printed result as applied by than intended in the original halftone image).

As known in the art, halftone refers to a reprographic technique that simulates a continuous-tone image through the use of dots that vary in size and/or spacing to generate a gradient-like effect. The halftone image is typically generated by converting a continuous-tone image using a screening technique that defines the spacing and/or size of the dots. FM screening is known to use same size dots with different spacing; AM screening uses different sized dots with the same spacing to define lighter or darker tones. In color printing, each ink is applied in a halftone pattern, either by a digital method (e.g. an inkjet that sprays the ink at the intended size and spacing) or an analog method (e.g. using ap printing plate with dots formed on the plate in the intended size and spacing). Thus, the dots formed on the print substrate may be referred to herein as halftone dots, screening dots, or simply dots. While the dots are typically circular in nature (especially in inkjet printing in which the smallest quantity of ink from the jet is in the form of a droplet), other screening techniques may create the smallest increment of ink on the substrate in a non-circular geometry. The invention as later described herein is not limited to any particular halftone or screening technique or dot geometry.

One possible pixel size of the acquired line scan images is in the order of magnitude of 0.1 mm, as in the ESKO^{®} AVT^{™} Apollo^{™} system. The AVT^{™} Jupiter^{™} viewer acquires images with a pixel size of 0.025 mm at highest optical magnification. Accordingly, the line scan image is therefore typically 4 times lower resolution than the highly magnified image. Another possible pixel size of the line scan images is 0.2 mm, in which case the line scan image has 8 times lower resolution than the optically magnified image.

As magnification increases, the image of the printed areas start to show the tiny screening dots that were used to create the print, as is typical in halftone printing. At very high magnification the dots become more prominent, and the graphic form of the print becomes less clear. Screening is a complex mathematical process which takes place in the pre-press software, where the data for printing is prepared. This algorithm defines location, type, diameter, shape, density, and colors of dots. Screening is typically a complex process, in part because of the overlay of colors.

A typical viewer may be configured to be positioned at any location across the width of the printed substrate, so that the operator can move it to view any selected feature. Some viewers support an automated mode of viewing, in which the required positions are defined via a software program, and the viewer repositions itself from time to time to the next location in the sequence, without operator interaction. The ESKO^{®} AVT^{™} Jupiter^{™} viewing solution is an example of such a viewer, with both manual and automated positioning of the viewing camera.

Such viewers display only a small field of view, and as such provide only a small sample of the entire printed media. Many printing facilities specify automatic inspection of the entire printed media, for which purpose a sampling viewer is insufficient, and thus additional cameras are required to view and inspect the entire printed area. These cameras do not typically provide a high resolution image, for cost minimization, and therefore a lower resolution image is acquired, enabling the use of a number of cameras that are positioned to capture a complete line across the entire media. These are typically line scan cameras, which operate at the very high speeds required for the fast printing machines.

In the current state of the art, the functionality provided by these line scan cameras is 100% quality inspection, while the viewers provide the function of variable magnification views of a sequence of selected sample locations in the print, the sequence being chosen by the operator or by an automated software process. Many automated inspection systems offer a combination of both sampling viewer and 100% line scan cameras, in order to provide full control over the quality of the print, such as the ESKO^{®} AVT ARGUS^{™} system, which offers printer customers the best of both worlds - sampling at high magnification and inspecting 100% of printed material. The combination of both technologies creates a large and relatively expensive product, which is not affordable to at least some printers.

The use of an optical magnifying viewer, however, may have one or more of the following drawbacks:
Inaccurate color: 3-chip color viewing cameras tend to be expensive, leading to a situation in which more popular viewing cameras have only one sensor, and use a Bayer filter to create a color image. This leads to several disadvantages, one being that the color of the pixels in the image is not accurate, as at each position the camera actually measures only Red or Green or Blue, and never measures all 3 colors, and thus the values of the other 2 colors are interpolated from neighboring pixels. Furthermore, when using a viewer, the colors may be different from the line-scan (typically of higher quality with respect to reproducing the actual color). This color discrepency between viewer/scanner image aquisitions is an issue commonly raised by operators worldwide.

Field of view: There is a tradeoff between field of view and level of zoom, as optical magnification solutions acquire a large area of view when at low resolution, and a small field of view when at high resolution. The higher the magnification, the less information is seen on the display.

Quality of Illumination: Array sensors used in viewing cameras with optical magnification require illuminating quite a large rectangular area. Creating uniform illumination over such areas is typically an engineering challenge which results in non-perfect results. Color acquisition is a function of illumination and thus pixels with exactly the same color may look as if they have different color in different areas of the image. Additionally, acquiring an image with an array camera and optical magnification on a moving surface typically requires using a flash illumination source (i.e. a strobe light), so as to "freeze" motion and eliminate blur in the images. Flash illumination tends to be inconsistent and non-uniform, thus a series of images may depict changes, even if there was no change in the print itself.

Slow response to change: Moving to a different magnification takes time because motorized lens units need time to mechanically move optical elements (e.g. lenses) from one setting to the next. Moving from one (x,y) location on the printed material to another (x,y) position also takes time. Accordingly, an optical zoom camera provides a slow response to changes in position and magnification.

One point at a time: Not only is the field of view small at high magnification, but each press typically has only one viewer camera, and thus only one position in the print can be the subject of a high resolution exploration or inquiry at any specific point in time, although the press operator may be interested in monitoring several locations of interest at high zoom, such as several register marks.

Cost: Optical magnification solutions are expensive to purchase, and need a relatively large amount of space. The combined camera and zoom lens is often heavy and requires expensive sturdy mechanical solutions to hold it stably in place.

Reliability: Optical zoom lens are prone to malfunctions. The motorized movement of optical elements requires motors, electronics, and software, all of which have finite lifetimes and can fail.

Accordingly, there remains a need in the field of printing for improved systems for acquiring images during a print run.

### SUMMARY OF THE INVENTION

One aspect of the invention relates to a method of inspecting a printed halftone image, such as but not limited to an in-process printed halftone image. The method includes the steps of capturing a digital image of the printed halftone image at a predefined first resolution, providing the captured digital image as an input to at least one neural network (NN), and outputting with the NN one or more synthesized magnified image areas of one or more regions of interest in the captured digital image using a super-resolution technique applied to the captured digital image. Each magnified image area has a second resolution greater than the first resolution, in which the second resolution includes a plurality of visually-defined halftone dots. The neural network is trained using a plurality of perfect pairs of printed information at the first resolution and the second resolution captured from a training printed halftone image.

In embodiments, the halftone image is produced on a predetermined type of print media using a predetermined print technology, and the training printed halftone image is also produced on the predetermined type of print media using the predetermined printing technology. Input information may be provided to the NN characterizing the predetermined type of media, the predetermined printing technology, and the predetermined set of printing parameters. The printed halftone image may be produced using a predetermined set of printing parameters, including at least pixel size and print speed, wherein the training printed halftone image is produced using the same predetermined set of printing parameters. The printing process may include applying ink to a substrate using a printing plate or a digital print technology, and the predetermined set of printing parameters may be selected from the group consisting of: screening type, printing technology type, and print speed. In embodiments, the predetermined set of printing parameters includes image data associated with the printed halftone image, wherein the printed halftone image is printed using one or more printing plates created from the image data, wherein the image data was used for imaging one of the one or more printing plates. The information characterizing the predetermined set of printing parameters may be provided in a data file corresponding to the printed halftone image. The one or more of the plurality of printing parameters may include screening type, and the data file may include a screening type associated with each pixel in the in printed halftone image. In embodiments, the printed halftone image comprises at least a first area of the image having a first screening type and at least a second area of the image having a second screening type different than the first screening type, wherein the method includes applying a first NN to the first area and a second NN to the second area.

The printed halftone image may be disposed on the predetermined type of print media while the print media is moving, in which case the method comprises capturing the digital image with a camera (e.g. a line scan camera) or scanner positioned to capture an image across a width of the media while the media is in motion. The one or more magnified images may be provided in real time while the image is being printed on the moving media. Embodiments of the method may be particularly well suited for implementation in connection with printed images that embody a printed label or printed packaging for a product. The method may include one or more defects in the printed image, in which case the plurality of perfect pairs may include a subset of perfect pairs having the one or more defects.

In embodiments, the perfect pairs include (a) a captured high resolution image and a degraded low resolution image generated from the captured high resolution image, or (b) a captured high resolution image and a captured low resolution image. The neural network (NN) may include multiple models, such as embodiments including one model for matching chromaticity between input low resolution and output high resolution images, and one model trained on degradation from low-resolution linescan to downsampled high resolution.

The captured digital image at the predefined first resolution may define a first area and a location for the one or more synthesized magnified image areas may be variable and user-selectable from anywhere within the first area. Embodiments may include simultaneously providing a plurality of synthesized magnified image areas each from a different region of interest.

Another aspect of the invention relates to a system for inspecting a printed halftone image. The system includes a first resolution camera for capturing a digital image of the printed halftone image at a predefined first resolution, and a processor programmed with instructions for processing the captured digital image, the instructions embodying at least one neural network (NN). The NN is configured to receive as inputs the captured digital image, and configured to output one or more synthesized magnified image areas of one or more regions of interest in the captured digital image using a super-resolution technique applied to the captured digital image. Each magnified image area has a second resolution greater than the first resolution, the second resolution comprising a plurality of visually-defined halftone dots. The at least one NN is trained using a plurality of perfect pairs of printed information at the first resolution and the second resolution captured from a training printed halftone image.

In embodiments, the printed halftone image is disposed on a predetermined type of print media using a predetermined print technology, the training printed halftone image is disposed on the predetermined type of print media using the predetermined printing technology, and the NN is configured to receive additional input information along with the captured digital image, wherein the additional input information includes information characterizing the predetermined type of media, the predetermined printing technology, and the predetermined set of printing parameters. The predetermined set of printing parameters may include at least pixel size and print speed, and the training printed halftone image may comprise an image produced using the same predetermined set of printing parameters.

In some embodiments, the system also includes a second resolution camera for capturing a digital image of the printed halftone image at the predefined second resolution, and a controller for assigning a location of the second resolution camera in response to an anomaly identified using the synthesized magnified image. In some embodiments, the digital image captured by the first resolution camera defines a first area, and the system further includes a user interface in communication with the processor for receiving one or more user-selected locations anywhere within the first area for providing the one or more synthesized magnified image areas from, wherein the processor is configured to provide the synthesized magnified image from the one or more user-selected locations. In some embodiments, the processor is configured to simultaneously provide a plurality of synthesized magnified image areas each from a different region of interest.

Yet another aspect of the invention relates to a method for creating a computer implemented model for inspection of a halftone image. The method includes the steps of creating one or more training printed halftone images; defining a plurality of perfect pairs of digital images from the training printed media, providing the plurality of perfect pairs as an input to at least one neural network (NN), and training the NN to output a synthesized version of the first digital image within a satisfactory degree of acceptability based upon input of the second digital image. Each perfect pair comprises at least a first digital image captured at a predetermined location of the training printed halftone image by a first image capture device set at a first resolution, and a second digital image depicting the same predetermined location of the training printed halftone image at a second resolution, the first resolution comprising a plurality of visually-defined halftone dots. The second digital image of the perfect pair may be a computer generated image generated by downsampling the captured first image or an image captured at the second resolution.

In embodiments in which the halftone image to be inspected is to be produced on a predetermined type of print media using a predetermined print technology and a predetermined set of printing parameters, creating the one or more training printed halftone image includes disposing the training printed halftone image on the predetermined type of print media using the predetermined printing technology and the predetermined set of printing parameters. The one or more training printed halftone images may feature a plurality of printing defects expected to be detected by the computer-implemented model during inspection of the halftone image.

Still another aspect of the invention relates to non-transitory computer media programmed with instructions for causing a computer processor to implement a neural network (NN) model that receives as inputs a first digital image captured at a predetermined location of a printed halftone image at a first resolution and returns a synthesized second digital image corresponding to the same predetermined location at a second resolution using super-resolution techniques applied to the first image, the second resolution comprising a plurality of visually-defined halftone dots. The inputs to the NN model may further comprise one or more parameters characteristic of a predetermined printer that created the printed halftone image, one or more parameters characteristic of a predetermined type of print media on which the halftone image was printed by the predetermined printer, and a set of predetermined printing parameters utilized by the predetermined printer when printing the printed halftone image on the predetermined type of print media. In some embodiments, the NN model may be trained using a plurality of perfect pairs of printed information captured at the first resolution and the second resolution from a training printed halftone image on the predetermined type of print media using the predetermined printer utilizing the set of predetermined printing parameters. In some embodiments, the NN model is trained using a plurality of perfect pairs of printed information, including a first training image at the second resolution captured from a training printed halftone image, and a second training image at the first resolution generated by downsampling the first training image.

### BRIEF DESCRIPTION OF THE DRAWINGS

FIG. 1A depicts an exemplary halftone image captured at a first resolution.
FIG. 1B depicts an exemplary portion of the first halftone image captured at a second resolution.
FIG. 2 schematically depicts an exemplary neural network model.
FIG. 3 schematically depicts an exemplary system embodiment for performing aspects of the invention.
FIG. 4 schematically depicts exemplary method steps for training a NN and utilizing a NN for creating synthesized magnified images, in accordance with one aspect of the invention.
FIG. 5A depicts an exemplary low resolution (LR) image.
FIG. 5B depicts a high resolution (HR) "ground-truth" image from which the LR image of FIG. 5A was generated.
FIG. 5C depicts a Super-Resolution (SR) image output from a model trained using, e.g., FIGS. 5A and 5B as training pairs.
FIG. 6A depicts another exemplary LR image.
FIG. 6B depicts an HR ground-truth image from which the LR image of FIG. 6A was generated.
FIG. 6C depicts an SR image output from a model trained using, e.g., FIGS. 6A and 6B as training pairs.
FIG. 7A depicts another exemplary LR image.
FIG. 7B depicts an HR ground-truth image from which the LR image of FIG. 7A was generated.
FIG. 7C depicts an SR image output from a model trained using, e.g., FIGS. 7A and 7B as training pairs.
FIG. 8A depicts another exemplary LR image.
FIG. 8B depicts an HR ground-truth image from which the LR image of FIG. 8A was generated.
FIG. 8C depicts an SR image output from a model trained using, e.g., FIGS. 8A and 8B as training pairs.
FIGS. 9A depicts an exemplary set of captured images of (from L to R): a captured LR image, a captured HR image, and the captured LR image adjusted to chromatically match the HR image.
FIGS. 9B depicts another exemplary set of captured images of (from L to R): a captured LR image, a captured HR image, and the captured LR image adjusted to chromatically match the HR image.
FIGS. 9C depicts yet another exemplary set of captured images of (from L to R): a captured LR image, a captured HR image, and the captured LR image adjusted to chromatically match the HR image.
FIG. 10A depicts an exemplary LR image captured using a linescan camera.
Fig. 10B depicts an HR ground-truth image captured from the same location as the LR image of FIG. 10A
FIG. 10C depicts an SR image output from a model trained using, e.g., FIG. 10B and an LR image downsampled from the image of FIG. 10B as training pairs.
FIG. 10D depicts an SR image output from a model trained using, e.g., FIGS. 10A and 10B as training pairs,

### DETAILED DESCRIPTION OF THE INVENTION

Aspects of the invention as described herein are aimed at providing an alternative solution that addresses the various drawbacks, limitations, and weaknesses of systems comprising a viewing camera combined with optical magnification, while still providing at least equivalent functionality, namely variable magnification views of a sequence of selected sample locations in the print, in which the sequence is selectable by the operator or by an automated software process. In addition to providing such functionality, embodiments also enable simultaneously displaying a multitude of magnification views of different selected sample locations in the print - a functionality physically impossible using prior viewing camera systems.

The functionalities as described herein are provided without the physical presence of a viewing camera at all, and thus, of course, also without optical magnification, but with all the details of the image correctly displayed, as if magnified by optics. The technology applied by the invention uses low magnification images from line scan cameras as input, and outputs high resolution images using an image processing technique known as Super Resolution. Super Resolution creates high magnification images from low resolution images via software that has been trained to accurately predict what a real optical high resolution image would have looked like, given the low resolution image. These images will look as if they were acquired by the optical magnification on the sampling viewer camera, but are indeed synthesized from lower resolution images in real time. As used herein the term "real time" means "instantaneous or without perceptible delay," and in the context of use on a subject printing press, this typically translates to showing the high-resolution image of the magnified portion simultaneously with any lower resolution image captured directly by the camera.

Single image Super Resolution is a Machine Learning technology that is well known in the art and has been used in many applications including medical imaging, satellite imagery, and others. Applying this technology to use a low-resolution line scan camera without optical magnification, to replace a high-resolution viewing camera with optical magnification, incurs several challenges in the reduction to practice. One challenge is to create the synthetic image with the correct screening dots, as the press operator often needs to see the dots. Many different types of screening patterns can be used when making a plate for printing, such that a single print job may use multiple different screening patterns, and even a single printing plate may have more than one screening pattern on it in order to achieve some printing-related effect.

Notably, while some embodiments may aim to create the synthetic image with accurate screening dots, which may be particularly useful in embodiments intended to assist with plate quality assurance, not all embodiments may require such accuracy. Some embodiments may have a more relaxed constraint for reproducing the "correct" screening dots, as in practice, the press operator rarely has knowledge/access to the pre-press/RIP screening dots. Rather, the operator typically focuses on color-to-color fine registration and general characteristics of the magnified dots. In order to detect/deduce, for instance, dot-gain, one does not need to reference the actual digital proof - rather, one can observe the phenomena on an unreferenced viewing. As long as the operator is provided the "as-if" experience enabling the same end-result detection of misregistration/pressure/viscosity/dot-gain as would be provided by a conventional optical zoom camera arrangement, such embodiments provide beneficial information to the operator without having to successfully complete the absolute task of reconstructing the screening.

One aspect of the invention relates to systems and methods for providing a 100% inspection system that can replace the need for an optical zoom camera and can generate from a low-resolution input image a synthetic high-resolution image that predicts the appearance of an actual optically-magnified image. Another aspect of the invention relates to solving the various challenges inherent in synthesizing the correct magnified image for each job.

Notably, while the systems as described herein may be particularly useful when applied "in-process" (i.e. to a sheet or web as it is printed in a printing operation) in order to help identify defects in the printed product on the fly, the invention is not limited thereto. The methods as described herein may also be applied to off-process applications to scan printed material removed from the printing press (e.g. using a line scan desktop scanner, or a low resolution photo of printed material long after the printing operation has been completed). It will thus be clear to a person skilled in the art that the input image as discussed herein may be acquired using many means, including but not limited to the in-process camera system as described herein, as well as a scanner or even a hand-held camera device, during printing or completely after printing has been completed.

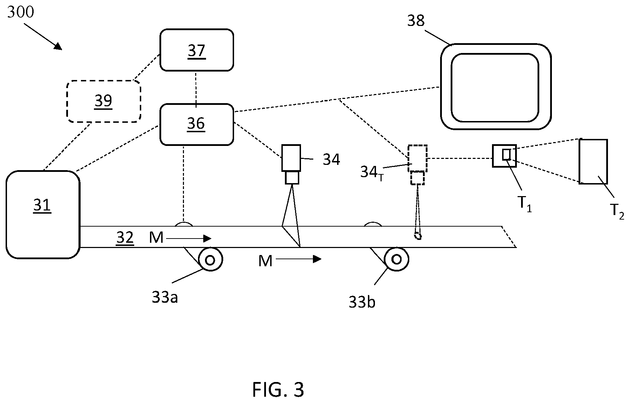

In an exemplary system 300, illustrated in FIG. 3, a printer 31 prints an image on a media 32 of printing substrate that is moving in a machine direction M and a line scan camera 34 takes an image across a width of the media perpendicular to the machine direction. Although embodiments discussed herein relate to web-fed printing systems in which the media comprises a web, aspects of the invention are not limited to use in connection with web-fed media and may also pertain to sheet fed media. Embodiments of the invention may also have uses not limited to printing operations. The substrate media may be, for example, paper, plastic, cardboard, metal, glass, ceramics, and the like, and the invention is not limited to any particular materials of construction of the media, or its format (e.g. web or sheet).

Non-print applications may include viewing and/or inspection of any type of materials manufactured in continuous web or sheet processes, such as metal sheets, glass, rubber, and the like, many of which have or would benefit from having camera systems for inspection of details and defects. Printing applications may include digital printing as well as analog printing (i.e. printed using printing plates). While described herein in the context of viewing and inspection processes, it should be understood that systems providing only viewing or only inspection may be provided. Likewise, while described herein in connection with an exemplary system having a line scan camera, the invention is not limited to any particular type of camera or image capture device for which the captured images are enhanced as described herein. Information is captured by camera 34 in slices, which are then assembled (i.e., stitched together) by processor 36, into one or more images having any desired length and width, including capturing the full length and width of the media, typically in real time. The stitching and image capture also typically includes information from an encoder that senses the speed of the media (e.g., by measuring rotation of a roller that rotates at a speed corresponding to the lateral speed of the contact point of the roller to the media). The stitched line scan image may then be presented to a user on a display 38 in any user-defined or system-predefined manner (i.e., such as, for printing of a product label, as a series of stills showing each label in full as it passes, in low resolution). Systems may include one or more additional higher-resolution cameras (not shown) to capture specific regions of the media on a periodic basis (e.g., to check a particular portion of each label where quality is particularly important or typically predictive of certain types of errors beginning to develop).

As noted above, the line scan image may typically have 4 times or 8 times lower resolution than the highly magnified image. Super Resolution algorithms can be trained to predict a high-resolution image with resolution that is a factor of 2, 4, 8 or even more times higher than the input image. The use of Super Resolution provides certain advantages relative to optical magnification.

Accurate color: Line scan cameras as used by the AVT^{™} Apollo^{™} system have 3 lines - responsive to wavelengths in the ranges of R, G and B, and so there is no need to extrapolate color data from neighboring pixels, as would be needed when a one-chip viewing camera is used. Each and every pixel value is measured in each of the 3 wavelength regions.

Field of view: There is no tradeoff between field of view and level of zoom, as the 100% cameras capture the image of the entire printed substrate, and the software magnification solutions can be applied to any size area within this.

Quality of illumination: Line scan cameras require illuminating a very narrow rectangle of the imaged substrate, as the camera sensor is a narrow rectangle, thus the illumination challenge is highly reduced, and typical illumination is highly uniform. The collection of light by the sensor is extremely fast per line of image, and mostly faster than the movement of the imaged material, and thus there is no blur, and no need for a flash of light. Constant illumination is used, providing a uniform and consistent narrow rectangle of light across the imaged surface.

Very fast to change: As there are no motors or other movement required from any solution component, the change in position or zoom essentially takes almost zero time.

Multiple locations simultaneously: Any number of locations can be magnified and displayed concurrently, providing the ability to monitor many positions in the print at high magnification at all times, and also permits different degrees of magnification at different locations, if desired.

Zero Hardware Cost: The software magnification solution does not have any hardware or other physical cost attached, as it uses the images that are already available from the line scan cameras. There is thus also no additional space or mechanical parts required for the magnification unit, as it requires only software, which can execute on the already-existing computer processor associated with the line-scan image capture system.

Reliability: Software has no moving parts prone to malfunction. Once tested and released the software has no lifetime limitation and requires no maintenance to keep it operational.

Images constructed using software magnification are optimally useful if at least equivalent to an optically magnified image from the perspective of a human operator tasked with making decisions, based on the software magnified image. Defects or anomalies that an operator needs to identify should be ideally visible in the image and are comparably perceptible by the operator as they would be in an optically magnified image. A unique challenge present in the field of printing is posed by the use of screening dots in printed images. Screening dots are designed to be imperceptible to the human eye when viewing the unmagnified printed image (i.e. and in digital images or photographs of the printed image as captured by a low resolution camera) such that the collective result of the printed dots, with several layers of ink of different colors, together create a continuous tone image or a color-filled area to the human observer. A camera low-resolution image will contain some information that can be used by an algorithm to recreate the correct screening patterns, as different screens will result in different low-resolution images. The collection of perfect pairs under many printing conditions for the training set used by the algorithm, and the use of the most appropriate trained model for each print job, are therefore factors relevant to accurately recreating the screening patterns.

One method for discerning how close the software-created image is to the optical image, is to use a key performance indicator (KPI) that scientifically quantifies the accuracy of the re-creation, such as the Mean Opinion Score (MOS). As is known in the art, the MOS is typically expressed as a single rational number (e.g. 1-5, where 1 is lowest quality and 5 is highest quality). Such a score can be gathered from the substantive opinions of a plurality of observers, or algorithmically estimated. Thus, each NN model may be considered adequately trained when a magnified image synthesized by the NN from the lower resolution image of the perfect pair is considered to be equivalent to the actual optically-magnified image of the perfect pair within a predetermined degree of confidence using the KPI. For example, the KPI may require a 4.5 average MOS from a field of trained observers. In the MOS example, the degree of confidence (i.e. the selected MOS threshold) may be set based upon an MOS score that is satisfactory enough to identify any defects required to be detected. In other words, it may not be necessary to have a perfect or near-perfect MOS score, if any and all defects that need to be found are present in synthesized images embodying a relatively lower MOS score. Other types of KPIs may be similarly utilized. For example, and without limitation, additional KPIs may include:
- invariance to augmentations: e.g., modifying the input's hue results in an output with same SR-detail quality with the new hue;
- performing automatic-inspection tasks (defect-detection, measuring misregistration, barcode decoding, OCR) on the HR ground-truth and the SR and obtaining similar end-results;
- model scaling: upon receiving samples in which the model performs poorly, verifying that adding these samples to the training dataset results in a newly-trained model that generalizes for those samples as well;
- good scores on metrics and loss-function hand-crafted/tuned to the problem domain: e.g. a loss that penalizes generation of screening dots in the SR where they do not exist in ground-truth HR image, or not reconstructing such dots that do exist in ground-truth HR image.

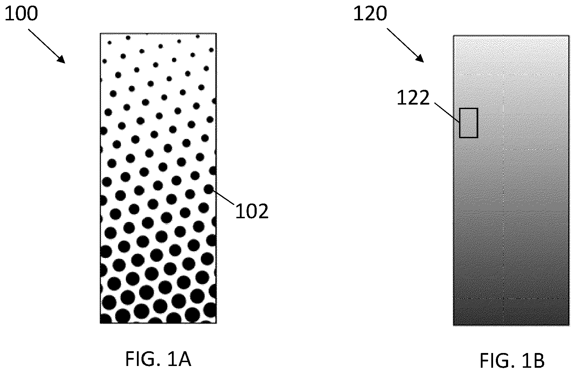

To explain the impact of screening, image 100 depicted in FIG. 1A is a magnified portion 122 of image 120 depicted in FIG. 1B, the latter of which is what the human eye would see from a sufficient distance, the former of which shows the screening dots 102 that create the illusion perceived by the human eye without magnification. Aspects of the invention relate to creation of the correct output dots of FIG. 1A - size, shape, distribution pattern, dot gain, defects and the like - synthesized from an input comprising the image of FIG. 1A and additional printing system and process information.

There are many shapes of screening dots, many methods of defining the dot size and distance between dots, as well as how to distribute them in the picture. The orientation of a specific screened separation/layer is often rotated relative to that of other screens in use in the print job, in order to avoid optical effects such as the Moiré effect.

Modern color halftoning typically uses CMYK separations, comprising a cyan separation, a magenta separation, a yellow separation, and a black separation, which are combined to form a combined halftone pattern that is perceived by human eye from a sufficient distance as continuous color tones. Magenta on top of yellow appears as orange/red, and cyan on top of yellow appears as green. The invention is not limited to CMYK, however, as it is well known in the art to print with more than 4 colors, including the use of specific "spot" colors that may correspond to a, e.g., a specific Pantone^{®} color associated with the trade dress corresponding to a specific consumer brand. Some printing processes may also include background colors (e.g. white for printing on certain types of substrates) and varnishes, in addition to foreground inks.

Predicting a high magnification image based upon a low resolution input image may be accomplished using a Machine Learning (ML) mechanism that has access to the screening parameters that were used when making the plates for the print job under review. In a preferred embodiment, this ML mechanism includes separate Neural Network (NN) models for each separate family of screening, the families being defined in the context of the ML prediction process. The separate NN models are typically trained using pairs of images of low-resolution and optical magnified images of the same material, and the data that describes the relevant screening parameters. The models are maintained during their use, and are catalogued or tagged in a manner that enables the ML software system to select the right NN to apply, when doing low-res to high-res predictive magnification.

In one embodiment, the software may apply more than one NN model to a selected section of print, depending on the use of different screens in the various printing plates. Any area of the print under inspection may have ink that was deposited using more than one single plate, and any plate in the printing job may have been made using multiple screenings for different areas on the plate. Therefore, each pixel of the print can be analyzed in terms of which screening parameters to feed to the prediction software, and which NN models to apply where.

In a preferred embodiment each pixel of the image has an associated data structure that stores the information sufficient to select the correct NN models and screening parameters for that pixel. As multiple plates overprint in the image, and as each plate can have different screening approaches in different areas (which areas may overlap with one another or have transitions from one to the other), each pixel in the low resolution image may belong to an area in which different types of screening are applied to it. The screening parameters are applied in a manner that correctly simulate the printing process, thus providing a means for creating the correct software-magnified image - essentially blending the layers of color in order to generate the right image. In some cases, this may require applying the ML algorithm to each color separation individually, and then blending the result together, or applying to groups of color separations which had the same screening applied to them. It may be advantageous to pre-process the screening information per plate and per plate areas to create a matter template for the print job, providing the function for processing each pixel in the image. This can be done when the job plates are made, and used again and again every time the job is printed. In addition, in instances in which the low-resolution scan is known to differ between various screening types (observable in the high-resolution viewer while 'degraded' in the low-resolution scanner but nonetheless with some surviving characteristic signal), good outcomes may be facilitated by ensuring balanced and functionally equitable representation amongst the training/evaluation/test sets, so that whatever screening 'signal' remains in the low-resolution scan can be translated into useful virtual high resolution information.

Exemplary Machine Learning Operations (MLOPS) model monitoring/deployment and data-validation components, as described further herein, may also be included as part of processor 36 (and, in particular, in a portion of processor 36 that may reside in the cloud). MLOPS components of data validation & preprocessing may be especially important for successful training in at least some embodiments. As used herein, the term "perfect pairs" is used to refer to training pairs that may be preprocessed and validated as needed and in accordance with one or more of the embodiments as described herein in order to produce a model with commercially successful results.

The task of generating super-resolution detail is generally complex enough to factor out additional complexities such by one or more of:
- geometrically warping pairs onto one another;
- singling out pairs with defects in only one of the two;
- accompanying the low/high-resolution pair with their respective pre-press screening digital data;
- classifying image characteristics such as natural-image, barcodes, solids, halftones, text as 'fairness-indicators' to ensure balanced & diverse representation in the training/validation/test sets (as well as monitoring during deployment to avoid training/serving skew rendering the model stale);
- inter-image color-matching.

With respect to color matching, it is understood that line-scanner and viewer images tend to vastly differ in their internal color profile, so it may be preferable to use preprocessing (e.g. using a separated NN model) to align chromaticity (or brightness, saturation, or other aspects of the color profile) and/or geometric alignment for producing the training pairs for the model, rather than relying on the model not to introduce input-image color modifications on top of the super-resolution output. Scanner/viewer discrepancies vary amongst installations, and thus it may not be suitable to be consistently and unambiguously model such discrepancies within a general 'shelf-product' model. Accordingly, the solution pipeline may include a color matcher/optimizer and/or a geometric alignment optimizer to help optimize and/or focus the training of the model. As described herein, the color-matcher function and/or geometric alignment are discussed as separate components in the training suite, while not limited thereto, to focus on the core disclosure relating to generating super-resolution images.

The manner in which screening data is employed may require further processing/augmenting to be suitable for, e.g. input for the training (a.k.a. 'early fusion' where an additional image is added as a plane to the CNN input tensor), used for the tasks of ensuring balancing/representation within the train/validation/test sets for various & diverse screening.

### Training the NN models:

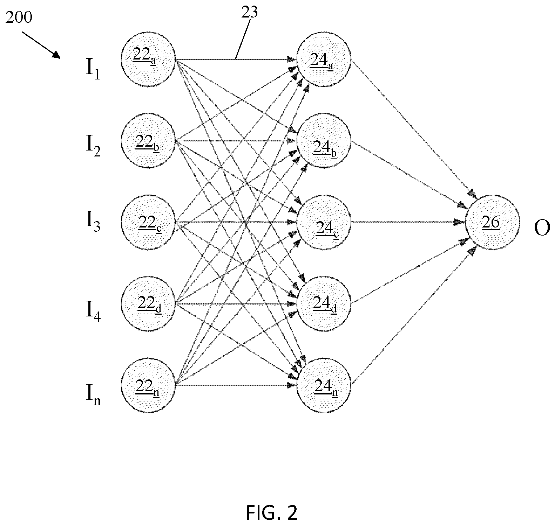

As is known in the art, and illustrated generally by FIG. 2, a typical NN includes an input layer (represented by nodes 22a-22n), a hidden layer (represented by nodes 24a-24n), and an output layer (represented by node 26). The nodes of the network are connected by a plurality of connections to other nodes in the network (represented by the arrows connecting the depicted nodes to one another, with only one representative arrow 23 labeled in FIG. 2, to reduce clutter, but which label or similar labels could be applied to all of the arrows). Each connection has a weight associated with it, corresponding to a weight given to the information from a preceding node when included in an algorithm generated at that node from information received from all connected preceding nodes. In use, a plurality of inputs (I₁-Iₙ) are input to the input layer, resulting in an output O from the model. The number of nodes in each layer as depicted are for illustration only, and it should be understood that the NN may have any number of nodes in any of the layers.

Training the NN models ideally includes the use of "perfect pairs," meaning that the images of the very same area of the very same material are recorded from both the low resolution and high optical magnification cameras. By contrast, recording a pair of images taken from even a small distance apart from each other, may, by chance, capture artifacts that have changed in the print as a result of the print technology itself. For example, artifacts such as ink density, substrate media tension, raw substrate quality and any nature of defect in the print, such as a streak or spot caused by a mechanical malfunction in the press, may occur at any time during printing, thus creating a risk that when taking two images at some distance apart, the two will not look exactly the same. This may be conceptualized as a "single responsibility principle" - the resulting model preferably focuses only on generating degraded high-resolution detail rather than "assuming" additional undesired responsibilities, such as geometric correction, defect-removal, or scanner-to-viewer color matching. Were the NN to be trained using a low resolution image and high magnification image that were taken from different prints and do not perfectly match, this would be an imperfect pair, and would create an incorrect prediction at a later stage.

A perfect pair can be assured if the very same material is imaged by both cameras. For reasons of space and different illumination conditions, in at least some embodiments, these 2 types of cameras may not practically co-exist at the very same location in the press. Accordingly, in one embodiment, the targeted piece of substrate passes under a first camera, and then later under a second camera, at different points in time, wherein the distance from the first and second camera and the corresponding points in time are synchronized. In another embodiment, a single optical system may be shared by two different image capture arrays (one that captures the image at a higher resolution than the other) to create the perfect pairs. Aspects of the invention thus include a method for capturing images in a synchronized manner, so that the resultant images create a "perfect pair" for NN training. In addition to the actual recorded images, additional metadata may be recorded in order to strengthen the probability of correct prediction when the model is applied. In some cases, such metadata may be as effective as utilizing the plate screening data. This metadata may also be used for model validation. Examples of such data include print speed, color values defined at points in the recorded images, and the nature of the recorded section (e.g. a logo, a barcode, text, and other similar characteristics). Because most defects are continuous in nature, however, it may not necessary to sample the exact physical material in both the low and high resolution acquisitions (for example, an LR image captured from one sheet (or portion the web) may be paired with an HR image captured from the corresponding (i.e. identical location on an identical image instance) on a different sheet (or in a different portion of the web). In such situations, data remediation/validation process may be used during training to avoid feed LR/HR pairs in which only one of them has a defect.

Otherwise, for example, in FIG. 3, training camera 34_{T} may be positioned to capture a specific portion of the media in respectively lower and higher resolution at a coordinated location on the media. For example, a single camera with split optics and two image capture arrays (not shown) may capture image T₁ at the lower resolution and T₂ at the higher resolution may be used for creating the perfect pair. For example, the image splitter may send the image to a first array and a second array, wherein each array may be referred to generically as an image capture device. Suitable technology known in the art includes CCD (charge-coupled device) and CMOS (complementary metal-oxide semiconductor) image sensor arrays, the details of which are well known and not repeated here. The higher resolution array may have more image capture units per unit area of the image than the lower resolution array, which may be achieved by disposing additional optics between the splitter and the second array to magnify the image before image capture. As a practical matter, however, installing special optical arrangements to capture images for training may be less desirable than utilizing data captured from thousands of already-installed systems without such optics. Or multiple spot cameras may be synchronized as described above, or a high-res camera 34_{T} may be synchronized with a linescan camera 34 that stitches a low-res image, for capture of the perfect pairs. The media 32 used for training may have known defects that are intentionally created (or just intentionally saved from previous runs with spurious defects on the same press) with known settings to ensure the SR image includes sufficient information for identifying such defects.

Processor 36 in FIG. 3 thus represents not only the processor configured to stitch together images from a linescan camera into a continuous image representative of one or more lateral areas of the media, but also may be programmed with machine-readable instructions embodying the NN model (e.g. as schematically depicted in Fig. 2) to be trained and/or the model that represents a trained NN model. Of course, a trained NN model may continue to learn "on the job" and thus the same processor may include both functionality for utilizing the NN model and for initial training and continuous training of the NN model. It should be understood that although depicted as a single processor 36, multiple processors may be interconnected to provide the desired functionality, and multiple NN models may be stored as machine readable instructions in computer memory 37 accessible by the processor. The memory may be any type of digital memory known in the art, and the processor may be any type of processor known in the art. Inputs to the NN thus include not only the low-res camera image, but also various settings of the printing press, characteristics of the media, the ink, and the underlying screen settings of the image to be printed. Although depicted as a single block 37 schematically in FIG. 3, it should be understood that the connected memory may include a plurality of areas and types of memory hardware or memory media, on premise or on Cloud, connected together by any type of computer hardware known in the art. In particular, computing resources optimized for real-time processing and processing the large amount of data for both input and output as described herein, including dedicated graphics processing units (GPUs) may be particularly useful.

Inputs to the NN 200 resident on processor 36 of system 300 may include the digital images captured by the camera 34 as well as input parameters including image information stored in memory 37. As is known in the art, the image information corresponding to the image to be printed may include screening information, color curves, and separation data that is used for operating the printer 31 in the case of a digital printer, or for imaging a printing plate using an imager 39 for systems in which printer 31 is a printing-plate-based printer or series of printing presses (i.e. one for each color separation). As is known in the art, imager 39 may comprise, e.g., a laser imager configured to create openings in a laser-ablated mask system (LAMS) layer on a photopolymer printing plate precursor, which imaged plate precursor is later exposed to actinic (e.g. UV) radiation to cure (i.e. crosslink) the photopolymer and is then further developed to remove uncured polymer. The various processes between imager and a finished plate are well known in the art, including steps not summarized above, and not discussed further herein. It is mentioned here, however, because at least some of the same data that may be important in converting a raw image to a halftone image to a set of digital instructions to be fed to a Raster Image Processor (RIP) for operating an imager for imaging the photopolymer plate may also be relevant as an input to the NN for creating the synthesized magnified image from a capture digital image at lower resolution in at least some applications. Thus, the same data file that may be used for creating a printing plate (or operating a digital printer), may not only include image information but also printer or printing press setting information, which may be used by the NN as input information. As depicted schematically herein, imager 39 is shown connecting to printer 31, but one of skill in the art will understand that there are many steps between the imager 39 and the printer 31 that are not shown, to reduce clutter.

Only some applications may have an objective to provide an as-if experience and outcome similar to that experienced using a physical high-resolution viewer enabling the operator with similar capabilities, such as for the case of validating/quality-assuring a manufactured plate. Applications with such an objective may in particular benefit from including information about the planned screening to compare against the generated plate. Not all embodiments seek to resolve this problem, however. In general, as long as there remains even a minor portion of the high-resolution details that differ in some manner between different types of screening, it is expected that the inverse-problem will be resolved. Namely, a low-resolution scan may contain extremely subtle frequencies/ remnants of original high-resolution detail that may not be depictable by the human eye but may in fact be picked up by a NN model architecture having sufficient depth/complexity.

While not limited to any particular NN approches / frameworks / architectures, suitable approaches include complex nested/residual convoluted NN (CNN) blocks (such as RRDB - Residual in Residual Dense Block) with skip-connections (where the inputs from previous block are concatinated to the output of subsequent blocks to prevent gradient vanishing). In one suitable GAN approach, the loss-function denoted as the descriminator may be dynamically trained in alternate steps alongside the designated super-resolution generator. each have competing objectives: generator to 'fool' the descriminator that the generated image is a TRUE high-resolution image and the descriminator to call the genrator's bluff, all while simultainiously training the generator regarding TRUE hi-res vs. super resolved data. Additionly, a loss framework called "cycle-GAN" may be employed, which has as an additional objective that the downscaled super-resolution output will be similar to the original low-resolution input (hence a "cycle"). Application-domain-specific loss functions may also be employed, such as those which, for instance, penalize upon generation of screening dots where not expected or for lack of generation where expected, and/or reward for generation of dots where expected and for non-generation where not expected. Alternatively, instead of using pre-trained feature-extractors (e.g. for content loss on top of the traditional pixel-to-pixel mean-square-error), the feature-extractor model may be fine-tuned to better depict anticipated artifacts that are more detrimental to a specific objective (such as generation of unrelated screening in the output).

The system for collecting training data automatically collects massive amounts of data that correlate low resolution images from line scan cameras to the corresponding set of high resolution images from the area camera - the perfect pairs. Coverage of collected data ideally span through a large variety of material types, printing technologies, screening methods, and designs. Automation of the collection process is desirable, in view of the mass of data used for training. When executed in such a comprehensive manner, the data collection can be used as a generic training set, and applied by multiple viewing and inspection system on production floors, at different sites, on different materials, and on different press technologies and machines.

For every given design in the training set, at least a single package is scanned and captured by both cameras. The line scan camera image and corresponding series of high resolution area camera images are then captured and linked by storing and using appropriate metadata with the relevant print parameters and print job data.

Training sets may be kept separate for different plate types, different screening types, and different print speeds, and other similar parameters. Thus, recording the perfect pairs includes classifying and organizing the recorded perfect pair images and the perfect pair metadata according to such print parameters. In a preferred embodiment, the combination of the perfect pair images and metadata are applied to properly predict the look of a high magnification image, when fed a low resolution image plus the metadata of the low resolution image. Aspects of the invention may also be operable without the metadata. Notably, the data-collection for training may also include recording operator usage-patterns such as locations and zooms within the print job in which a high-zoomed view was manually initiated by the operator during the printing production. This may assist in focusing/emphasizing performance to adhere a fit-for-purpose manner (ensuring the training set contains a high representation of regions operators often desire for magnification).

### Predicting High Magnification Print Defects

Printing often produces at least some print defects, including those mentioned above, namely streaks, spots, and movement between color separations, as examples of common types of defects. Applying a NN to images captured with a low resolution camera as described herein also includes providing high-resolution images of defects created by software rather than optics. Therefore, the process of training the NN also includes feeding the NN with perfect pairs of prints that include print defects. The NN of the invention may be configured to predict defect magnifications even without specific training with such perfect pairs, but the use of such training images with defects ensures a higher level of accuracy in the synthetic images. Such defects may be synthesized as part of the data-augmentation preprocess, using a hi-res to low-res degradation model that features synthetic low-resolution model inputs that are representative of the synthetic hi-res ground-truth output.

The claimed invention can be applied to both inspection systems and viewing cameras. For both purposes, the training is preferably performed by a dual camera (or at least dual image capture) system, to capture perfect pairs. Once the models are built, however, they can be applied to any low-resolution camera - whether 100% line scan type image or a matrix camera acting as a viewer or inspection system. Aspects of the invention enable the viewer camera to create highly magnified images without magnification optics (zoom), using only fixed resolution optics.

Historically, Super Resolution models and methods were designed for general use of varying real-life natural images (e.g., CCTV), typically without separately acquired real low-resolution images, but rather by using hi-res images downgraded using some method to create a pair of high- and low-resolution pairs. Unlike such general-purpose Super Resolution datasets, scanning of print is usually under stable and controlled conditions, thus narrowing the possible range of solutions. The prevalence of massive, diverse training sets, in which there are perfect pairs of high and low resolution images, further strengthened by useful metadata such as print speed, print job classification, and leveraging the known-good print image from the image file or the inspection Master image, are useful for extracting data-balancing "fairness-indicators" to help ensure proper weighting and representations of the training/validation/testing data.

Embodiments of the invention preferably have an architecture with the necessary complexity to properly model the known degradation phenomena in image acquisition - e.g. pixel elongation, line scan encoder inaccuracies, as well as backlight dirt and streaks - typically not present in array-cameras with optical magnification.

Some embodiments may include a separately developed model responsible solely for modeling the degradation from high-resolution to the real low-resolution line scan images. The number of possible solutions for hi-res-to-low-res generation is orders of magnitude smaller than that of the low-res-to-super-resolution prediction. This model can then be used in a pipeline of low-res-line scan = = > low-res-from-hi-res-image = = > super-resolution, with "==>" denoting forward-feed to a pipeline-trained model. In addition to increasing local pixel details, this same-res-to-same-res linescan-to-naive-low-res-area-cam can encompass restoration of chromatic differences between the area camera and line scan camera. Such a separate model may be particularly desirable to avoid burdening the network with additional 'responsibilities' other than the generation of super-resolution detail. Accordingly, aspects of at least some embodiments of the invention also include the degradation model as an important part of the system.

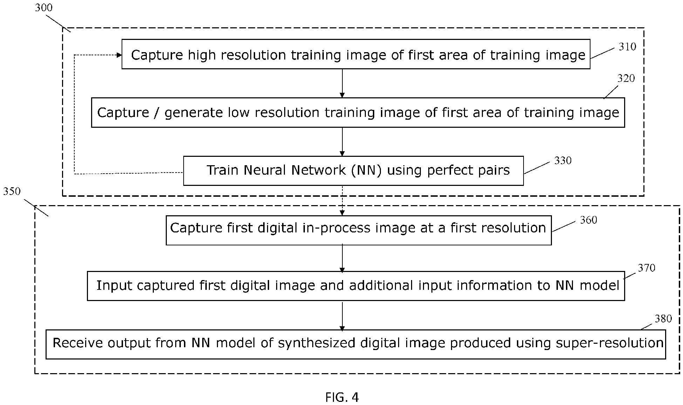

Thus, as depicted in FIG. 4, one aspect of the invention include a method 300 for training a NN model, comprising the steps of capturing a first, high resolution (HR) digital training image of a first area of a training halftone printed image in step 310, capturing (or generating) a second, low resolution (LR) digital training image of the first area of the training halftone printed image in step 320, the first and second digital images comprising a perfect pair, and training the NN model using the perfect pairs in step 330 by inputting the first digital pair and other information relating to the printer, the media, and the parameters characterizing the settings of the printer for each set of perfect pairs, and repeating the inputting for as many perfect pairs as it takes for the NN to be functional. The LR training image may be captured using a LR camera, or computer generated from (i.e. by downsampling) the HR training image. Creation of the perfect pair may include any number of additional preprocessing techniques, such as described herein below, to compensate for, or otherwise remove other differences between the LR and HR images in the training pairs, so that the super-resolution model can focus on resolution, rather than other artifacts that might otherwise be present in the training pairs. Thus, processor 36 may further be programmed with instructions for generating low resolution images down-sampled from captured high resolution images, as is known in the art.

Another aspect of the invention includes a method 450 for inspecting a printed halftone image printed with a predetermined printer on a predetermined type of media using a predetermined set of printing parameters, the method comprising the steps of capturing a first digital LR image at a first resolution in step 460, inputting the captured first digital image and additional input information to a NN model in step 470, such as a NN trained in accordance with method 400 using perfect pairs created using the same additional input information (printer, type of media, and print parameters), and receiving output from NN model of a second digital (SR) image synthesized from the NN input information using super-resolution techniques in step 480. Exemplary predetermined printing parameters may include, but are not limited to, the XY pixel size, the press speed (i.e. whether elongation is physical or digital for max-press-speed support), and the printing technology (e.g. flexo, gravure, inkjet). In embodiments in which the perfect pairs are generated using various preprocessing techniques, the LR image fed to the NN may be similarly preprocessed so that the NN for generating the SR image receives input consistent with the training pairs. It should be understood that FIG. 4 is intended to be a high-level depiction of an exemplary method, and that additional steps (not depicted) may be present, as further described herein.

Additional embodiments may employ an outcome test that grades whether a defect was able to be similarly detected on SR/HR as compared to lesser detection performance in the input LR scan. Metrics to be used for rating similarity of detection in HR/SR vs. LR may be specific to print inspection. For example, for inspection of barcodes, the metric may include improvement in a readability score. Another metric may relate to the ability to perform registration in both HR and SR images and verify equivalent results.

Embodiments may include methods of adding color profiling from the line CCD (LCCD) to the HR area camera for training pairs preprocessing (making perfect pairs even more perfect), which enables the model to focus on generating super-resolution details. One exemplary method may include image pair distribution matching, such as is described in E. Reinhard, M. Adhikhmin, B. Gooch and P. Shirley, "Color transfer between images," in IEEE Computer Graphics and Applications, vol. 21, no. 5, pp. 34-41, July-Aug. 2001, doi: 10.1109/38.946629 (incorporated herein by reference). Another exemplary method may include using the fact that images are geometrically registered (pix2pix), such as is described by F. Porikli in "Inter-Camera Color Calibration by Correlation Model Function, TR2003-103, Feb. 2004, incorporated herein by reference. Yet another method may be convoluted neural network (CNN) based, such as using a straightforward CNN architecture, e.g. trained per job, thus obtaining an ad-hoc regression model. Training per-job may have advantages, since the discrepancy between the linescan and area camera may differ between sites (e.g. some will have the viewer at higher intensity/contrast/white-vs.-transparent substrate polarity and some with lower mainly due to different adjustments of illumination in both linescan and area).

Embodiments may include adding a Mumford-Shah loss function or other methods for narrowing/regularizing the solution range. Screening may be used as part of the metadata for fairness indicators (data balancing), fused with the input into the model (for serving/inference, early fusion becomes part of the input), or for model validation (for training/validation), such as for ensuring e.g. that the model does not generate bogus screening dots in solid regions.

Data Augmentation per linescan print specifics may be used, e.g. for linescan camera stitching misalignment, or for backlight dirt noise (appearing as a streak over the clear substrate regions in the input low-resolution line-scan).

Data balancing may be advantageous, such as including active inspection information in the meta data, such as indicating whether a particular defect is a sample of misregistration, under-pressure, over-pressure, etc. Advantages of using such data balancing may allow, for example, upon detection of underperforming samples, identifying that images were scanned at low speed while training/validation/testing were all collected at high speeds, thus causing a training/serving skew.

Models may give added representation to samples that show greater changes from LR to SR/HR. For example, a designated degradation model may be used for handling transition from LCCD to HR area camera phenomena. Embodiments may include a separate preprocessing model (deployed within the inference serving pipeline), for resolving chroma/illumination discrepancies, Point spread function (PSF)/pixel noise issues, or the like.

Mean Opinion Score (MOS) may be used as a factor to identify what the user/operator discerned as outputs of the model that are real versus fake.

Embodiments may employ a multi-model pipeline, including one model for matching chromaticity between input and output LR/HR and one model trained on degradation from low-res linescan to biCubic-downsampled HR. A sequential pipeline of NN models may also be used for providing a 'recursive' SR solution in which, for example, the output of one (e.g. 4x) magnification model may serve as an input for a further magnification (e.g. 4x, for a total magnification of 16x). Such an implementation may still utilize a true 16x ground-truth HR scan. The multiple models may be well-suited to address elongation (modeled as a motion vertical filter, part from real motion, part interpolation (e.g. in case current image is further elongated to cater user-maximal-speed), changes from linescan-specific phenomena, such as backlight streaks, encoder errors, etc.) and may use several networks dynamically dispatched per resolution/elongation. In an exemplary embodiment, during inspection setup, a user may enter an intended maximum speed so that the golden base is elongated to that maximum speed as a worst case (as the speed is typically constant throughout the inspection). At lower speeds, the current may be partially elongated due to the 'natural' motion and further downscaled-in-print-direction up to the worst-case base using a suitable model. The invention is not limited to the use (or non-use of) or type or number of additional NNs or other data processing for balancing the inputs to the super-resolution NN model.

Invention embodiments may employ fairness indicators to balance training data by weighting per difference between HR and LR as well as presence of defective samples (e.g. using master-current comparison) for anomalies as well as misregistration, under-pressure, etc., for contributing to control of data suitable for print-inspection applications. This may include collecting meta-data of user patterns.

Embodiments may also include machine Learning Operations (MLOPS) model monitoring via collecting data regarding locations in the master data set where a user used SR, thus verifying whether there is a training/serving compliance or whether there is a skew. A feedback option (e.g. a software "button" or rating ) may be provided to indicate a bad SR experience, for continued refinement of the model.

In embodiments, both LR and HR scanners / cameras may be employed along with SR, first using inspection on LR, then for low-confidence results, repeating on super-resolution, and then if a defect is detected with SR, prioritize sending the native-high-resolution viewer to the region of the defect that is detected. Thus, in the system depicted in FIG. 3, camera 34_{T} may also represent a high resolution camera (and processor 36 may encompass or be in communication with a controller therefor) not unlike those known in the art for capturing high-resolution images as described in the background herein. A key difference from the prior art systems, however, is the inclusion of additional SR monitoring as described herein that may be used for directing the HR camera to an area that is identified as having a high probability of a defect, based upon the SR analysis as described herein.

### EXAMPLES

The exemplary figures are that follow show examples illustrating proof of concept with respect to one embodiment of the invention.

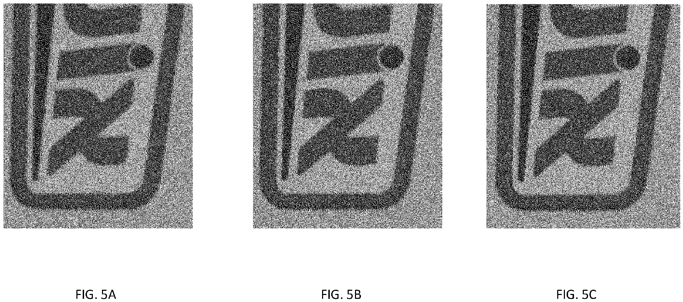

FIGS. 5A-5C depict true-perfect-pairs of LR/HR where a degradation function was applied on the HR to generate its LR training pair. FIG. 5A depicts an LR image generated from degradation of the "HR- Ground-Truth" depicted in FIG. 5B. FIG. 5C depicts the SR (Super-Resolution) model output based upon the input of an LR image (not shown, similar to FIG. 5A but captured via a LR camera), to the model trained using, e.g., FIGs. 5A and 5B as training pairs.

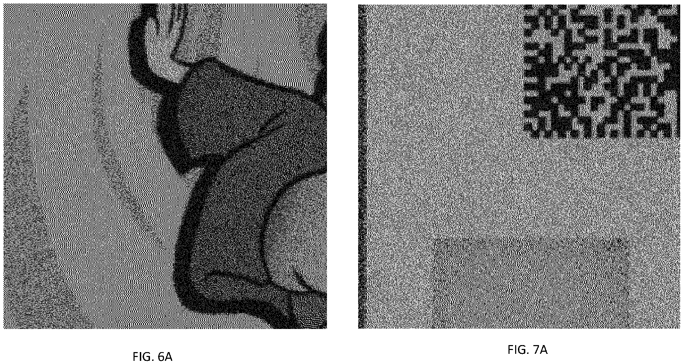

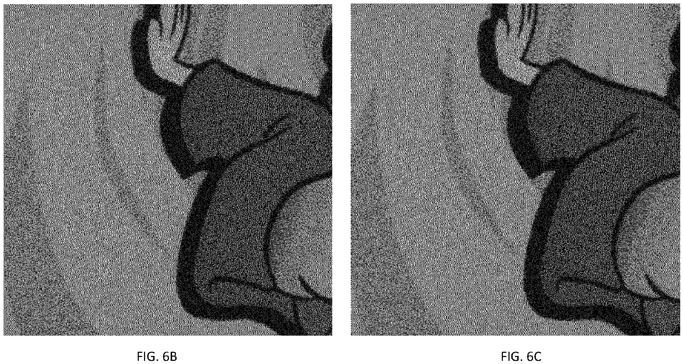

FIGS. 6A-6C depict another set of images, wherein FIG. 6A depicts a LR image generated from degradation of the HR Ground-Truth image of FIG. 6B and FIG. 6C depicts the SR-Super-Resolution model output based upon feeding a LR image (not shown, similar to FIG. 6A but captured by an actual LR camera) to the model trained using, e.g., FIGs. 6A and 6B as training pairs.

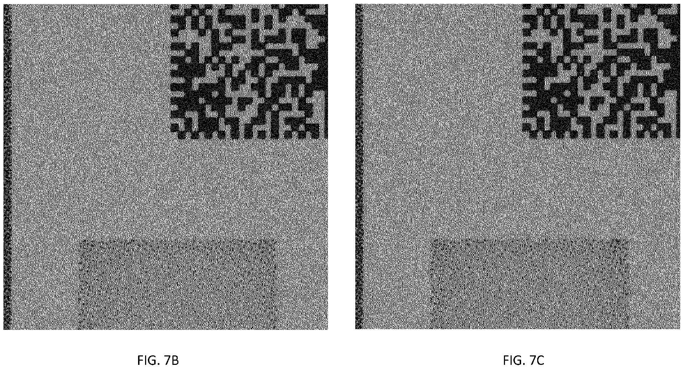

FIGS. 7A-7C depict another set of images, wherein FIG. 7A depicts a LR image generated from degradation of the HR Ground-Truth image of FIG. 7B and FIG. 7C depicts the SR-Super-Resolution model output based upon feeding a LR image (not shown, similar to FIG. 7A but captured by an actual LR camera) to the model trained using, e.g., FIGs. 7A and 7B as training pairs.

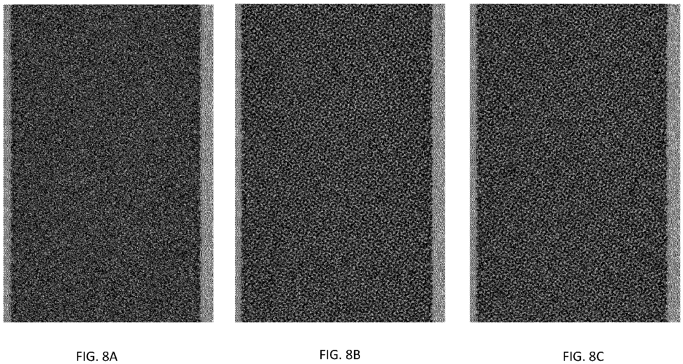

FIGS. 8A-8C depict another set of images, wherein FIG. 8A depicts a LR image generated from degradation of the HR Ground-Truth image of FIG. 8B and FIG. 8C depicts the SR-Super-Resolution model output based upon feeding a LR image (not shown, similar to FIG. 8A but captured by an actual LR camera) to the model trained using, e.g., FIGs. 8A and 8B as training pairs.

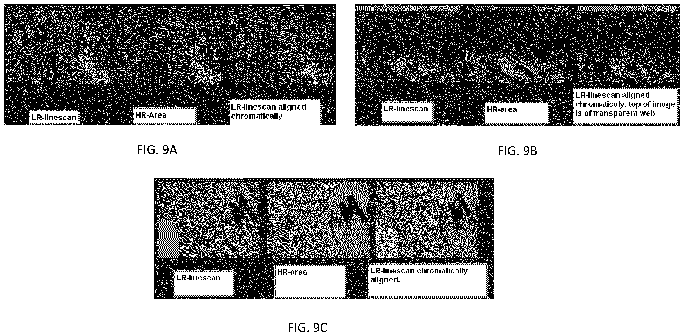

FIGS. 9A, 9B, and 9C depict examples of three captured images each (from L to R: a captured LR image, a captured HR image, and the captured LR image adjusted to chromatically match the HR image) demonstrating advantages of aligning the LR/HR training pairs chromatically as well as with respect to the geometric warping. Using methods that can exploit pixel-to-pixel geometric correspondence are advantageous.

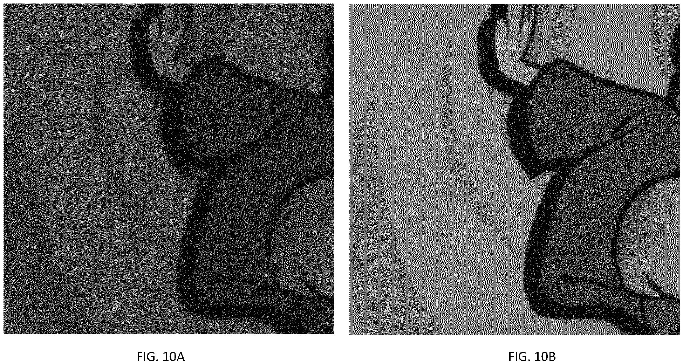

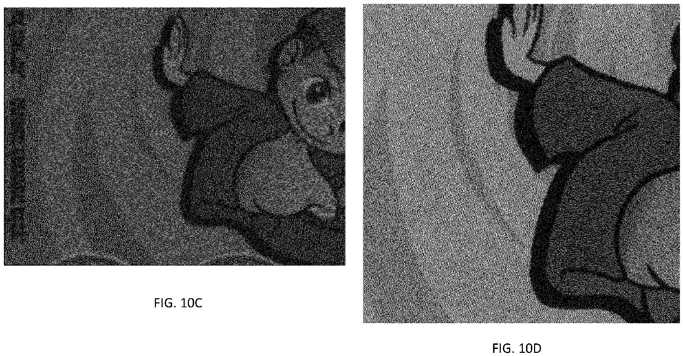

FIGS. 10A-10D depict the effects of training on pairs that are not chromatically aligned, resulting in the model attempting to adjust chromaticity on top of its intended purpose solely to generate super-resolution details. FIG. 10A comprises a true LR from a linescan camera. Fig. 10B comprises the HR ground-truth, which exhibits a noticeable difference in chromaticity as well as contrast from FIG. 10A, and which was used in a training set along with a LR figure degraded from FIG. 10B. As expected, applying a network trained on degraded HR TRUE-perfect pairs, but asked to apply the model to a LR image with different chromicity provides suboptimal results, depicted in FIG. 10C. Indeed, chroma is retained in the SR result, but the model failed to generate the desired super-resolution details, albeit, while accurately reconstructing ordinary edges.

FIG. 10D depicts an SR image generated using a model trained on the linescan of FIG. 10A paired with the HR of FIG. 10B (rather than using a degraded version of 10B for the LR pair). As is evident from FIG. 10D, the model corrected the input's chromaticity as well as the resolution. Notably, however, differences in chromicity are not consistent amongst systems, and even different jobs/materials/reflectence, thus the neural network may be configured to omit undesired changes in the image's chromaticity on top of its original purpose of generating super resolution details.

### Aspects

In summary, aspects of the invention can be stated as follows:
Aspect 1: A method of inspecting a printed halftone image, the method comprising the steps of:
   a. capturing a digital image of the printed halftone image at a predefined first resolution;
   b. providing the captured digital image as an input to at least one neural network (NN); and
   c. outputting with the NN one or more synthesized magnified image areas of one or more regions of interest in the captured digital image using a super-resolution technique applied to the captured digital image, wherein each magnified image area has a second resolution greater than the first resolution, the second resolution comprising a plurality of visually-defined halftone dots, the at least one neural network trained using a plurality of perfect pairs of printed information at the first resolution and the second resolution captured from a training printed halftone image.
Aspect 2: The method of Aspect 1, wherein the halftone image is produced on a predetermined type of print media using a predetermined print technology, and the training printed halftone image is also produced on the predetermined type of print media using the predetermined printing technology.
Aspect 3: The method of Aspect 2, further comprising providing input information to the NN characterizing the predetermined type of media, the predetermined printing technology, and the predetermined set of printing parameters,
Aspect 4: The method of Aspect 3, wherein the printed halftone image is produced with a predetermined set of printing parameters, including at least pixel size and print speed, and the training printed halftone image is produced using the same predetermined set of printing parameters.
Aspect 5: The method of any one of Aspects 3 or 4, wherein the printing process comprises applying ink to a substrate using a printing plate or a digital print technology, and the predetermined set of printing parameters are selected from the group consisting of: screening type, printing technology type, and print speed.
Aspect 6: The method of any one of Aspects 3-5, wherein the predetermined set of printing parameters includes image data associated with the printed halftone image, wherein the printed halftone image is printed using one or more printing plates created from the image data, wherein the image data was used for imaging one of the one or more printing plates.
Aspect 7: The method of any one of Aspects 3-6, wherein the information characterizing the predetermined set of printing parameters is provided in a data file corresponding to the printed halftone image.
Aspect 8: The method of any one of Aspects 3-7, wherein the one or more of the plurality of printing parameters includes screening type, and the data file includes a screening type associated with each pixel in the printed halftone image.
Aspect 9: The method of Aspect 8, wherein the printed halftone image comprises at least a first area of the image having a first screening type and at least a second area of the image having a second screening type different than the first screening type, wherein the method includes applying a first NN to the first area and a second NN to the second area.
Aspect 10: The method of any one of Aspects 2-9, wherein the printed halftone image is disposed on the predetermined type of print media while the print media is moving, and the method comprises capturing the digital image with a camera or scanner positioned to capture an image across a width of the media while the media is in motion.
Aspect 11: The method of Aspect 10, wherein the camera is a line scan camera.
Aspect 12: The method of Aspect 10, comprising providing the one or more magnified images in real time while the image is being printed on the moving media.
Aspect 13: The method of any one of the foregoing Aspects, wherein the printed image embodies a printed label or printed packaging for a product.
Aspect 14: The method of any of the foregoing Aspects, further comprising identifying one or more defects in the printed image.
Aspect 15: The method of Aspect 14, wherein the plurality of perfect pairs comprises a subset of perfect pairs having the one or more defects.
Aspect 16: The method of any one of Aspects 1-15, wherein the perfect pairs include a captured high resolution image and a degraded low resolution image generated from the captured high resolution image.
Aspect 17: The method of any one of Aspects 1-15, wherein the perfect pairs include a captured high resolution image and a captured low resolution image.
Aspect 18: The method of any one of Aspects 1-15, wherein the at least one neural network (NN) includes one model for matching chromaticity between input low resolution and output high resolution images, and one model trained on degradation from low-resolution linescan to downsampled high resolution.
Aspect 19: The method of any one of Aspects 1-18, wherein the captured digital image at the predefined first resolution defines a first area and wherein a location for the one or more synthesized magnified image areas is variable and user-selectable from anywhere within the first area.
Aspect 20: The method of any one of Aspects 1-18, comprising simultaneously providing a plurality of synthesized magnified image areas each from a different region of interest.
Aspect 21: A system for inspecting an printed halftone image, the system comprising:
   a first resolution camera for capturing a digital image of the printed halftone image at a predefined first resolution;
   a processor programmed with instructions for processing the captured digital image, the instructions embodying at least one neural network (NN), the NN configured to receive as inputs the captured digital image, and configured to output one or more synthesized magnified image areas of one or more regions of interest in the captured digital image using a super-resolution technique applied to the captured digital image, wherein each magnified image area has a second resolution greater than the first resolution, the second resolution comprising a plurality of visually-defined halftone dots, the at least one NN comprising trained using a plurality of perfect pairs of printed information at the first resolution and the second resolution captured from a training printed halftone image.
Aspect 22: The system of Aspect 21, wherein the printed halftone image is disposed on a predetermined type of print media using a predetermined print technology, the training printed halftone image is disposed on the predetermined type of print media using the predetermined printing technology, and the NN is configured to receive additional input information along with the captured digital image, the additional input information comprising information characterizing the predetermined type of media, the predetermined printing technology, and the predetermined set of printing parameters.
Aspect 23: The system of Aspect 22, wherein the predetermined set of printing parameters includes at least pixel size and print speed, and the training printed halftone image comprises an image produced using the same predetermined set of printing parameters.
Aspect 24: The system of Aspect 22, further comprising a second resolution camera for capturing a digital image of the printed halftone image at the predefined second resolution, and a controller for assigning a location of the second resolution camera in response to an anomaly identified using the synthesized magnified image.
Aspect 25: The system of Aspect 22, wherein the digital image captured by the first resolution camera defines a first area, the system further comprising a user interface in communication with the processor for receiving one or more user-selected locations anywhere within the first area for providing the one or more synthesized magnified image areas from, wherein the processor is configured to provide the synthesized magnified image from the one or more user-selected locations.
Aspect 26: The system of Aspect 22, wherein the processor is configured to simultaneously provide a plurality of synthesized magnified image areas each from a different region of interest.
Aspect 27: A method for creating a computer implemented model for inspection of a halftone image, the method comprising:
   a. creating one or more training printed halftone images;
   b. defining a plurality of perfect pairs of digital images from the training printed media, each perfect pair comprising at least a first digital image captured at a predetermined location of the training printed halftone image by a first image capture device set at a first resolution, and a second digital image depicting the same predetermined location of the training printed halftone image at a second resolution, the first resolution comprising a plurality of visually-defined halftone dots;
   c. providing the plurality of perfect pairs as an input to at least one neural network (NN), and training the NN to output a synthesized version of the first digital image within a satisfactory degree of acceptability based upon input of the second digital image.
Aspect 28: The method of Aspect 27, wherein the second digital image of the perfect pair is a computer generated image generated by downsampling the captured first image.
Aspect 29: The method of Aspect 27, wherein the second digital image of the perfect pair is an image captured at the second resolution.
Aspect 30: The method of any one of Aspects 27-29, wherein the halftone image to be inspected is to be produced on a predetermined type of print media using a predetermined print technology and a predetermined set of printing parameters, wherein creating the one or more training printed halftone image includes disposing the training printed halftone image on the predetermined type of print media using the predetermined printing technology and the predetermined set of printing parameters,
Aspect 31: The method of Aspect 27, wherein the one or more training printed halftone images comprises a plurality of printing defects expected to be detected by the computer-implemented model during inspection of the halftone image.
Aspect 32: Non-transitory computer media programmed with instructions for causing a computer processor to implement a neural network (NN) model that receives as inputs a first digital image captured at a predetermined location of a printed halftone image at a first resolution and returns a synthesized second digital image corresponding to the same predetermined location at a second resolution using super-resolution techniques applied to the first image, the second resolution comprising a plurality of visually-defined halftone dots.
Aspect 33: The non-transitory computer media of Aspect 32, wherein the inputs to the NN model further comprise one or more parameters characteristic of a predetermined printer that created the printed halftone image, one or more parameters characteristic of a predetermined type of print media on which the halftone image was printed by the predetermined printer, and a set of predetermined printing parameters utilized by the predetermined printer when printing the printed halftone image on the predetermined type of print media.
Aspect 34: The non-transitory computer media of Aspect 32, wherein the NN model is trained using a plurality of perfect pairs of printed information captured at the first resolution and the second resolution from a training printed halftone image on the predetermined type of print media using the predetermined printer utilizing the set of predetermined printing parameters.
Aspect 35: The non-transitory computer media of Aspect 32, wherein the NN model is trained using a plurality of perfect pairs of printed information, including a first training image at the second resolution captured from a training printed halftone image, and a second training image at the first resolution generated by downsampling the first training image.

### Computer Hardware and Software

The instructions, programming, or application(s) may be software or firmware used to implement the device functions associated with the devices (e.g. computers, processors, printers) described throughout this description.

Program aspects of the technology may be thought of as "products" or "articles of manufacture" typically in the form of executable code or process instructions and/or associated data that is stored on or embodied in a type of machine or processor readable medium (e.g., transitory or non-transitory), such as a memory of a computer used to download or otherwise install such programming into the processor or other devices as discussed herein, or a transportable storage device or a communications medium for carrying program for installation in the processor or other devices as discussed herein. Other storage devices or configurations may be added to or substituted for those in the example. Such other storage devices may be implemented using any type of storage medium having computer or processor readable instructions or programming stored therein and may include, for example, any or all of the tangible memory of the computers, processors or the like, or associated modules.

The computers, processors, or other systems described throughout the specification include but are not limited to a processor (e.g. CPU) for performing algorithms as disclosed herein, memory for storing data and programming instructions for supporting the operation of the processor, user input/output (e.g. buttons, switches, display screens, etc.) for receiving instructions from the user and providing feedback to a user, printers or presses (e.g. proofer, inkjet printer, press printer, etc.) for printing the physical print media, and any transceivers (e.g. wired, wireless, Bluetooth, WiFi, etc.) for communication among the devices.

The figures as shown herein depict only certain elements of an exemplary system, and other systems and methods may also be used. Furthermore, even the exemplary systems may comprise additional components not expressly depicted or explained, as will be understood by those of skill in the art. Accordingly, some embodiments may include additional elements not depicted in the figures or discussed herein and/or may omit elements depicted and/or discussed that are not essential for that embodiment. In still other embodiments, elements with similar function may substitute for elements depicted and discussed herein.

Any of the steps or functionality of the system and methods as described herein can be embodied in programming or one more applications. According to some embodiments, "function," "functions," "application," "applications," "instruction," "instructions," or "programming" are program(s) that execute functions defined in the programs. Various programming languages may be employed to create one or more of the applications, structured in a variety of manners, such as object-oriented programming languages (e.g., Objective-C, Java, or C++), procedural programming languages (e.g., C or assembly language), or firmware. In a specific example, a third party application (e.g., an application developed using the ANDROID^{™} or IOS^{™} software development kit (SDK) by an entity other than the vendor of the particular platform) may be mobile software running on a mobile operating system such as IOS^{™}, ANDROID^{™}, WINDOWS^{®} Phone, or another mobile operating systems. In this example, the third party application can invoke API calls provided by the operating system to facilitate functionality described herein.

Hence, a machine-readable medium may take many forms of tangible storage medium. Non-volatile storage media include, for example, optical or magnetic disks, such as any of the storage devices in any computer(s) or the like, such as may be used to implement the client device, media gateway, transcoder, etc. shown in the drawings. Volatile storage media include dynamic memory, such as main memory of such a computer platform. Tangible transmission media include coaxial cables; copper wire and fiber optics, including the wires that comprise a bus within a computer system. Carrier-wave transmission media may take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a processor for execution.

In addition, in the foregoing Detailed Description, it can be seen that various features are grouped together in various examples for the purpose of streamlining the disclosure. This method of disclosure is not to be interpreted as reflecting an intention that the claimed examples require more features than are expressly recited in each claim. Rather, as the following claims reflect, the subject matter to be protected may lie in fewer than all features of any single disclosed example. Hence, the following claims are hereby incorporated into the Detailed Description, with each claim standing on its own as a separately claimed subject matter.

Although the invention is illustrated and described herein with reference to specific embodiments, the invention is not intended to be limited to the details shown. Rather, various modifications may be made in the details within the scope and range of equivalents of the claims and without departing from the invention.

## Claims

1. A method of inspecting a printed halftone image, the method comprising the steps of:
a. capturing a digital image of the printed halftone image at a predefined first resolution;
b. providing the captured digital image as an input to at least one neural network (NN); and
c. outputting with the NN one or more synthesized magnified image areas of one or more regions of interest in the captured digital image using a super-resolution technique applied to the captured digital image, wherein each magnified image area has a second resolution greater than the first resolution, the second resolution comprising a plurality of visually-defined halftone dots, the at least one neural network trained using a plurality of perfect pairs of printed information at the first resolution and the second resolution captured from a training printed halftone image.

2. The method of claim 1, wherein the halftone image is produced on a predetermined type of print media using a predetermined print technology, and the training printed halftone image is also produced on the predetermined type of print media using the predetermined printing technology.

3. The method of claim 2, further comprising providing input information to the NN characterizing the predetermined type of media, the predetermined printing technology, and the predetermined set of printing parameters, optionally wherein the printed halftone image is produced with a predetermined set of printing parameters, including at least pixel size and print speed, and the training printed halftone image is produced using the same predetermined set of printing parameters, optionally wherein the printing process comprises applying ink to a substrate using a printing plate or a digital print technology, and the predetermined set of printing parameters are selected from the group consisting of: screening type, printing technology type, and print speed.

4. The method of claim 3, wherein at least one of:
the predetermined set of printing parameters includes image data associated with the printed halftone image, wherein the printed halftone image is printed using one or more printing plates created from the image data, wherein the image data was used for imaging one of the one or more printing plates;
the information characterizing the predetermined set of printing parameters is provided in a data file corresponding to the printed halftone image; and
the one or more of the plurality of printing parameters includes screening type, and the data file includes a screening type associated with each pixel in the printed halftone image.

5. The method of claim 4, wherein the printed halftone image comprises at least a first area of the image having a first screening type and at least a second area of the image having a second screening type different than the first screening type, wherein the method includes applying a first NN to the first area and a second NN to the second area.

6. The method of any one of claims 2-5, wherein the printed halftone image is disposed on the predetermined type of print media while the print media is moving, and the method comprises capturing the digital image with a camera or scanner, optionally a line scan camera, positioned to capture an image across a width of the media while the media is in motion.

7. The method of claim 6, comprising providing the one or more magnified images in real time while the image is being printed on the moving media.

8. The method of any one of the foregoing claims, wherein the printed image embodies a printed label or printed packaging for a product, further comprising identifying one or more defects in the printed image, wherein the plurality of perfect pairs comprises a subset of perfect pairs having the one or more defects.

9. The method of any one of the foregoing claims, wherein the perfect pairs include (a) a captured high resolution image and a degraded low resolution image generated from the captured high resolution image; or (b) a captured high resolution image and a captured low resolution image.

10. The method of any one of claims 1-9, wherein the at least one neural network (NN) includes one model for matching chromaticity between input low resolution and output high resolution images, and one model trained on degradation from low-resolution linescan to downsampled high resolution.

11. The method of any one of claims 1-10, wherein the captured digital image at the predefined first resolution defines a first area and wherein a location for the one or more synthesized magnified image areas is variable and user-selectable from anywhere within the first area, and/or wherein the method includes simultaneously providing a plurality of synthesized magnified image areas each from a different region of interest.

12. A system for inspecting a printed halftone image, the system comprising:
a first resolution camera for capturing a digital image of the printed halftone image at a predefined first resolution;
a processor programmed with instructions for processing the captured digital image, the instructions embodying at least one neural network (NN), the NN configured to receive as inputs the captured digital image, and configured to output one or more synthesized magnified image areas of one or more regions of interest in the captured digital image using a super-resolution technique applied to the captured digital image, wherein each magnified image area has a second resolution greater than the first resolution, the second resolution comprising a plurality of visually-defined halftone dots, the at least one NN comprising trained using a plurality of perfect pairs of printed information at the first resolution and the second resolution captured from a training printed halftone image.

13. The system of claim 12, wherein the printed halftone image is disposed on a predetermined type of print media using a predetermined print technology, the training printed halftone image is disposed on the predetermined type of print media using the predetermined printing technology, and the NN is configured to receive additional input information along with the captured digital image, the additional input information comprising information characterizing the predetermined type of media, the predetermined printing technology, and the predetermined set of printing parameters, optionally:
(a) wherein the predetermined set of printing parameters includes at least pixel size and print speed, and the training printed halftone image comprises an image produced using the same predetermined set of printing parameters;
(b) further comprising a second resolution camera for capturing a digital image of the printed halftone image at the predefined second resolution, and a controller for assigning a location of the second resolution camera in response to an anomaly identified using the synthesized magnified image;
(c) wherein the digital image captured by the first resolution camera defines a first area, the system further comprising a user interface in communication with the processor for receiving one or more user-selected locations anywhere within the first area for providing the one or more synthesized magnified image areas from, wherein the processor is configured to provide the synthesized magnified image from the one or more user-selected locations;
(d) wherein the processor is configured to simultaneously provide a plurality of synthesized magnified image areas each from a different region of interest; or
(e) a combination of two or more of (a)-(d).

14. A method for creating a computer implemented model for inspection of a halftone image, the method comprising:
a. creating one or more training printed halftone images;
b. defining a plurality of perfect pairs of digital images from the training printed media, each perfect pair comprising at least a first digital image captured at a predetermined location of the training printed halftone image by a first image capture device set at a first resolution, and a second digital image depicting the same predetermined location of the training printed halftone image at a second resolution, the first resolution comprising a plurality of visually-defined halftone dots;
c. providing the plurality of perfect pairs as an input to at least one neural network (NN), and training the NN to output a synthesized version of the first digital image within a satisfactory degree of acceptability based upon input of the second digital image.

15. Non-transitory computer media programmed with instructions for causing a computer processor to implement a neural network (NN) model that receives as inputs a first digital image captured at a predetermined location of a printed halftone image at a first resolution and returns a synthesized second digital image corresponding to the same predetermined location at a second resolution using super-resolution techniques applied to the first image, the second resolution comprising a plurality of visually-defined halftone dots.
